Europäisches Patentamt

European Patent Office

Office européen des brevets

(19)

(11) Publication number: **0 191 875
B1**

(12) # EUROPEAN PATENT SPECIFICATION

(45) Date of publication of patent specification: **19.04.89**

(51) Int. Cl.⁴: **C 08 F 14/06**, C 08 F 2/02

(21) Application number: **85101740.0**

(22) Date of filing: **16.02.85**

(54) **Process for preparation of polyvinyl chloride type polymer.**

(43) Date of publication of application:
**27.08.86 Bulletin 86/35**

(45) Publication of the grant of the patent:
**19.04.89 Bulletin 89/16**

(84) Designated Contracting States:
**DE FR IT**

(56) References cited:
**PATENTS ABSTRACTS OF JAPAN, vol. 3, no.
14 (C-36)22r, 8th February 1979; & JP - A - 53
137 289 (TOYO SODA KOGYO K.K.) 30-11-1978**

**PATENTS ABSTRACTS OF JAPAN, vol. 3, no.
50 (C-44)50r, 27th April 1979; & JP - A - 54 24
990 (TOYO SODA KOGYO K.K.) 24-02-1979**

(73) Proprietor: **Tosoh Corporation
4560, Oaza Tonda
Shinnanyo-shi Yamaguchi-ken (JP)**

(72) Inventor: **Nagano, Mineo
2717-1, Oaza Tonda
Shinnanyo-shi Yamaguchi-ken (JP)**
Inventor: **Saito, Michio
5-7, Betsumei 3-chome
Yokkaichi-shi Mie-ken (JP)**

(74) Representative: **Patentanwaltsbüro Cohausz &
Florack
Postfach 14 01 47
D-4000 Düsseldorf 1 (DE)**

The file contains technical information
submitted after the application was filed and
not included in this specification

Courier Press, Leamington Spa, England.

**Description**

## BACKGROUND OF THE INVENTION

(1) Field of the Invention

The present invention relates to a homopolymer or copolymer of vinyl chloride, that is, a polyvinyl chloride type polymer, which is suitable as a seed polymer for gas phase polymerization.

(2) Description of the Related Art

Gas phase polymerization of vinyl chloride is advantageous in various points. The product is inferior in processing property and fish eye characteristic, however, so the industrial value of this polymerization process is low. Bulk polymerization is disclosed in U.S. Patent Nos. 3,622,553 and 3,625,932 for example.

## SUMMARY OF THE INVENTION

We engaged in research with a view to improving the processing property and fish eye characteristic of a polymer obtained by gas phase polymerization of vinyl chloride. We found that this technical problem can be solved by carrying out the gas phase polymerization used a seed polymer obtained by bulk polymerization under specific conditions. We have now completed the present invention based on this finding.

More specifically, in accordance with the present invention, there is provided a process for the preparation of a polyvinyl chloride type polymer by bulk homopolymerization or bulk copolymerizaiton of vinyl chloride, wherein the polymerization is carried out in the presence of a polymeric substance soluble or colloidally dispersible in vinyl chloride (hereinafter referred to as "modifier") and after completion of the polymerization, a modifier is added to a slurry formed by the polymerization.

## BRIEF DESCRIPTION OF THE DRAWINGS

Figure 1 is a graph illustrating the relation among the porosity of the seed polymer, the breeding ratio of the gas phase polymerization, and the porosity of the gas phase polymerization product:

Fig. 2 is a graph illustrating the relation among the bulk density of the seed polymer, the breeding ratio at the gas phase polymerization, and the bulk density of the gas phase polymerization product; and

Fig. 3 is a graph illustrating the relation among the breeding ratio, the Pr value, and the bulk density of the gas phase polymerization product.

## DESCRIPTION OF THE PREFERRED EMBODIMENTS

The present invention will now be described in detail.

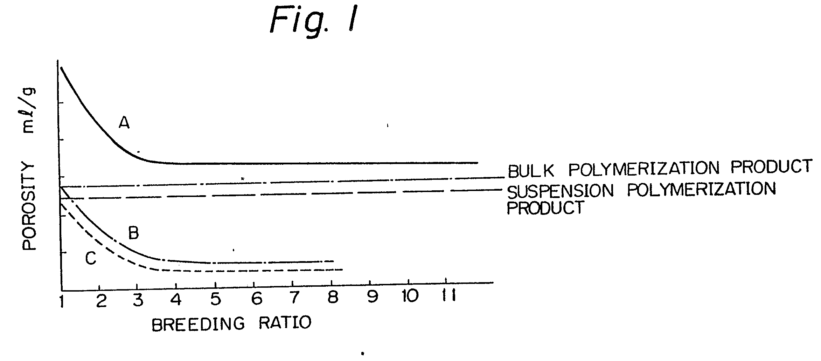

Referring to Fig. 1 showing the change of the porosity in the gas phase polymerization, in which the gas phase breeding ratio (= amount of gas phase polymerization product/amount of seed polymer) is plotted on the abscissa and the porous property (= porosity, ml/g of PVC) is plotted on the ordinate, the porous property is drastically reduced up to the point of the breeding ratio of 3, and in the region where the breeding ratio is higher than 3, the porous property is expressed by a gently decreased line and is substantially constant. It is considered that, in the initial stage, polymerization is advanced in the interior of particles to close inner cavities and, in the region where the breeding ratio is higher than 3, fresh porous particles are formed by the gas phase polymerization and the porosity becomes constant. Accordingly, when a commercially available bulk polymerization or suspension polymerization product is used as a seed polymer, as indicated by curve B or C in Fig. 1, the obtained gas phase polymerization product is a polymer poor in porous property, like sand. Therefore, in order to obtain a gas phase polymerization product having a good porous property, it is preferred that a seed polymer having a porosity at least 1.3 times the porosity of a commerically available suspension polymerization product be used. Thus, in the present invention, in order to obtain a gas phase polymerization product having a good porous property, it is indispensable that a seed polymer having a high porosity be used.

As described hereinbefore, according to the present invention, by using a seed polymer having a high porous property, a gas phase polymerization product having a good porous property can be obtained even at a high breeding ratio. However, a product having a good fish eye characteristic cannot be obtained even if the above requirement alone is satisfied. At the fish eye test, not only the porous property indicating how rapidly polymer particles are digested and gelled, but also the uniformity of gelation of the particles within the same time is tested. In short, non-uniform particles are detected. Accordingly, it is required that the polymerization product have not only a good porous property but also a high uniformity.

I) Monomers

The present invention can be applied to homopolymerization and copolymerization of vinyl chloride. As the comonomer used for copolymerization, there can be mentioned, for example, vinyl halides such as vinyl fluoride and vinyl bromide, olefins such as ethylene, propylene, and n-butene, vinyl esters such as vinyl acetate, vinyl propionate, vinyl laurate, and vinyl stearate, unsaturated acids such as acrylic acid, methacrylic acid, and itaconic acid, esters thereof vinyl ethers such as methylvinyl ether and ethylvinyl ether, maleic acid, fumaric acid, and maleic anhydride and derivatives thereof, styrene and derivatives thereof, and vinylidene chloride and vinylidene fluoride.

## II) Modifiers

One of the inventors, together with other research chemists, found that if bulk polymerization of vinyl chloride is carried out in the presence of ethyl cellulose or the like, a product having a uniform particle size distribution can be obtained (see Japanese Unexamined Patent Publication (Kokai) No. 54—24990). We found that this ethyl cellulose or other modifier improves the porosity of a bulk polymerization product and the processing property and fish eye characteristic. However, as described hereinafter, the effect is insufficient when the modifier is only present during the polymerization, but if the modifier is further added after the polymerization, there can be obtained a gas phase polymerization product comparable to a product obtained by suspension polymerization or two-staged bulk polymerization in the processing property and the fish eye characteristic.

As the modifier, there are used oil-soluble cellulose derivatives such as nitro cellulose and cellulose acetate (preferably cellulose triacetate), and ethylene-vinyl acetate copolymers, ethylene-acrylic acid ester copolymers, methacrylic acid homopolymers and copolymers, aromatic and aliphatic petroleum resins modified polyvinyl alcohols having a low saponification degree, polyvinyl acetate, uncured chloroprene rubbers, uncured nitrile rubbers, and chlorinated polyethylene. A mixture of two or more of these modifiers can be used.

It is preferred that the amount of the modifier to be made present at the polymerization be 10 to 10,000 ppm, especially 30 to 5000 ppm, based on the polymer in the slurry formed by the polymerization, and that the amount of the modifier to be added after completion of the polymerization be 30 to 10,000 ppm, especially 50 to 5000 ppm, based on the polymer in the slurry formed by the polymerisation. In the case where it is desired to improve not only the processing property and the fish eye characteristic but also the impact resistance and the flow characteristic in a product formed by the gas phase polymerization using a seed polymer obtained by the bulk polymerization of the present invention, it is preferred that each modifier be used in an amount larger than 10,000 ppm.

## III) Functions of Modifiers

The modifier present during the polymerization increases the viscosity of the monomer present in the cavities in the interior of the polymer growing during the subsequent gas phase polymerization and prevents the polymerization in these cavities, with the result that a gas phase polymerization product excellent in the porous property can be obtained.

The modifier added after completion of the polymerization prevents agglomeration of particles of the formed polymer and occurrence of gelation when the unreacted momomers are recovered. Furthermore, this modifier coats or encapsulates the surfaces of the particles. At the subsequent gas phase polymerization, the polymer is swollen by vinyl chloride to prevent an initiator from permeating into the interior of the particles, with the result that the polymerization in the interior of the particules is controlled but the polymerization in the surfaces of the particles is promoted. Furthermore, the viscosity of the monomers adsorbed and liquefied in the interior of the polymer formed by the gas phase polymerization is increased by the modifier, and the porous property of this portion is improved in the same manner as described above. Accordingly, there can be obtained a gas phase polymerization product having a good porous property and, hence, a good processing property, and also having a good uniformity and, hence, a good fish eye characteristic.

## IV) Conversion

If the conversion is too low, the obtained product is too soft and it cannot be suitably used as a seed polymer for the gas phase polymerization. If the conversion is too high, the amount of monomers left unadsorbed on the product is reduced, and the product is not a slurry product but a blocked product and a powdery polymer can hardly be obtained. Accordingly, the conversion is to 25%, especially 10% to 20%.

## V) Initiator

When at least one initiator having such a low-temperature activity that the temperature at the half-value of 10 hours is lower than 45°C is selected from organic peroxides usually used for polymerization of vinyl chloride and is used in the process of the present invention, a desirable conversion which is not higher than 25% can be obtained. In order to obtain a desirable conversion stably, it is necessary that the desirable conversion be attained within a short time and then the polymerization be not substantially advanced. For this purpose, the kind and mixing ratio of the initiator are selected so that the half-value period at the polymerization temperature (determined by the desired average degree of polymerization of the product is 45 to 90 minutes.

As preferred examples of the initiator to be used for the bulk polymerization of the present invention, there can be mentioned isobutyl peroxide (IBP), acetylcyclohexylsulfonyl peroxide (ACSP), 2,2,4-trimethyl-pentyl-2-peroxyphenoxy acetate (TMP—PA), α-cumyl peroxyneodecanate (CNDP), di-3-methoxybutyl-peroxy dicarbonate (DMBP), and di-2-ethoxyethylperoxy dicarbonate (EEP) (the foregoing abbreviations will be used hereinafter).

## VI) Additives Other Than Modifiers

In the bulk polymerization of the present invention, it is preferred that a lubricant selected from higher saturated and unsaturated fatty acids, esters thereof, higher saturated and unsaturated alcohols, and rice wax, polyethylene wax, and bisamide be used for promoting dispersion of secondary particles constituting the polymer particles, preventing agglomeration of these particles, preventing formation of coarse particles, and narrowing the particle size distribution.

Furthermore, there may preferably be used at least one polymer stabilizer selected from metal soaps of higher fatty acids such as calcium, zinc, barium and aluminum salts of stearic acid, organic tin compounds such as octyl tin derivatives, butyl tin deivatives and methyl tin derivatives, and antimony derivatives.

The foregoing effects become prominent if each of the lubricant and the stabilizer is used in an amount of at least 50 ppm based on the formed slurry. However, even if the amount added of the lubricant or stabilizer exceeds 5000 ppm, no further enhancement of the effects can be expected.

VII) Bulk Density

The gas phase polymerization product is defective in that the bulk density is lower than that of a commercially available suspension polymerization product.

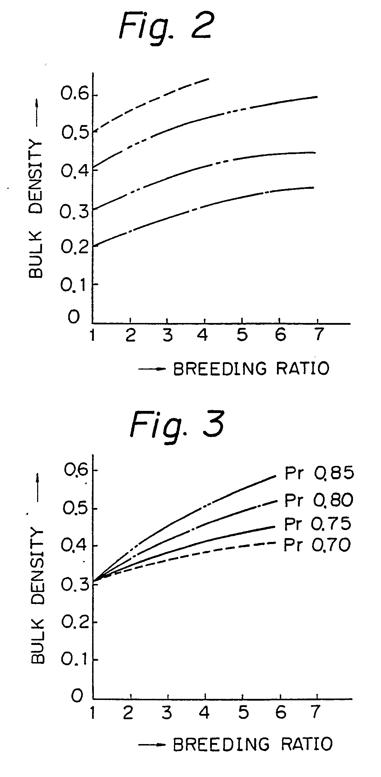

We found that when the gas phase polymerization is carried out under a constant polymerization pressure and temperature, the bulk density of the formed gas phase polymerization product is greatly influenced by the bulk density of the starting seed polymer. Furthermore, it was found that when the gas phase polymerization is carried out at a constant polymerization temperature by using a certain seed polymer, the higher the polymerization pressure, the higher the bulk density of the product. Moreover, if the breeding ratio is increased, the bulk density is increased, though gradually. This relation is illustrated in Figs. 2 and 3.

Accordingly, in the case where the gas phase polymerization is carried out under constant conditions, an increase of the bulk density of the seed polymer is effective for increasing the bulk density of the gas phase polymerization product. When we made research on means for increasing the bulk density of the seed polymer, we found the following facts.

(1) When bulk polymerization is carried out under constant conditions and unreacted VCM is recovered under a constant pressure, the higher the interior temperature of the reaction vessel, the higher the bulk density of the seed polymer. However, if this temperature is too high, a gelation product is readily formed. A temperature of 45°C to 60°C is preferred.

(2) As the speed of stirring at the time of constant pressure recovery of the unreacted monomer is higher beyond a certain level, the bulk density of the polymer is increased. If the speed is too high, gelation is readily caused. When an anchor type stirring vane is used, a speed of 100 to 300 rpm is preferred irrespective of the apparatus scale. The vane diameter should correspond to 93% to 96% of the inner diameter of the reaction vessel. If the vane diameter is smaller than 93% of the inner diameter of the reaction vessel, stirring becomes insufficient, and if the vane diameter is larger than 96% of the inner diameter of the reaction vessel, the vane will bite the polymer between the vane and the inner wall of the reaction vessel and the vane will be stopped.

(3) If the speed of recovery of unreacted VCM is too high, the temperature of respective particles is partially lowered because of the evaporation heat of unreacted VCM, with the result that low temperature agglomeration is readily caused, the content of particles left on a sieve is increased, or the fish eye characteristic of the seed polymer is degraded. Accordingly, the recovery speed should be adjusted appropriately so that individual particles are independently present.

It is preferred that, at the time of constant pressure recovery, 40% to 30% of the unreacted monomer be recovered for an initial 30 minutes and 70% to 50% of the unreacted monomer be recovered for an initial 60 minutes and that, then, the temperature difference between the jacket and the interior of the reaction vessel be decreased and the recovery speed be further reduced.

(4) Also, the conversion at the bulk polymerization is an important factor. If the conversion is lower than 10%, particles formed by the polymerization are soft and agglomeration or cohesion is readily caused by heat and stirring shearing during the step of recovery of unreacted VCM, with the result that the bulk density per se is increased but the property is degraded, the particle size distribution becomes broad, and the content of coarse particles on a sieve is increased. If the conversion is lower than 14%, either of the bulk density or the porous property is poor. Accordingly, the conversion of the bulk polymerization should be 14% to 25% where respective particles have a definite shape, especially 14% to 20%. A seed polymer obtained at a conversion included within this range under recovery conditions as described in (1) and (2) above has a high porous property in the interior of particles, a round shape with a reduced number of convexities and concavities and, hence, a high bulk density.

When the gas phase polymerization is carried out by using a seed polymer obtained under the above-mentioned conditions while maintaining the polymerization conditions so that the ratio of the polymerization pressure to the saturated vapor pressure of the monomer at the polymerization temperature (hereinafter referred to as "Pr") is 0.70 to 0.80, a product having a good porous property, a good fish eye characteristic, and a high bulk density can be obtained at a breeding ratio of 5 to 6.

VIII) Application of Product of Present Invention to Gas Phase Polymerization

The slurry obtained by the bulk polymerization of the present invention is placed under a reduced pressure to evaporate the unreacted monomer, whereby a powdery product is obtained. As pointed out

4

hereinbefore, when this polymer is used as the seed polymer for the gas phase polymerization, a gas phase polymerization product excellent in the processing property and fish eye characteristic can be obtained. The process for the gas phase polymerization is not particularly critical.

For example, the gas phase polymerization may be carried out in the presence of an initiator in a polymerization vessel equipped with a stirrer, a gas fluidized bed type polymerization vessel, or a gas fluidized bed type polymerization vessel equipped with a stirrer under such conditions that the above-mentioned Pr value is in the range of from 0.5 to 1.0.

An initiator having a relatively low decomposition speed and a half-life period of 1.5 to 3.5 hours at the polymerization temperature is preferably used. For example, in addition to the above-mentioned CNDP, DMBP, and EEP, there may be used organic peroxides such as di-3-methoxybutylperoxy dicarbonate (MC), bis-4-tr-butylcyclohexylperoxy dicarbonate, di-2-ethylhexylperoxy dicarbonate (IPP), t-butylperoxy pivalate (PV), t-butylperoxy neodecanate (ND), succinic acid peroxide, octanoyl peroxide, lauryl peroxide (LPO), 3,5,5-trimethylhexaamyl peroxide and benzoyl peroxide (BPO), azobis compounds such as azobisbutyro-nitrile and azobisvaleronitrile, and organic metal radical generators such as triethyl aluminum. These initiators may be used singly or in the form of mixtures of two or more. (The above abbreviations will be used hereinafter.)

The present invention will now be described in detail with reference to the following examples.

### Examples 1 through 13 and Comparative Examples 1 through 7

A modifier was charged into a 100-liter polymerization vessel equipped with an anchor type stirrer, in which the inner walls and interior equipment such as a stirring vane were coated with a scale-deposition preventing agent composed of Evans Blue and polyvinyl alcohol (addition of the modifier at this stage will be referred to as "initial addition" hereinafter). The polymerization vessel was evacuated, followed by nitrogen substitution and evacuation (lower than 666.610 Pa (5 Torr)) to remove oxygen from the polymerization vessel. Then, 50 kg of vinyl chloride was charged in the polymerization vessel and stirred at 180 rpm. Warm water was circulated in a jacket to elevate the inner temperature of the polymerization vessel to 56°C. Then, 21.5 ml of a 20% by weight solution of ACSP in toluene was introduced into a charger. Air in the charger was replaced by vinyl chloride. The ACSP solution was rushed into the polymerization vessel by a pressure pump using 4 kg of vinyl chloride to initiate polymerization. Cooling water was circulated in the jacket to adjust the inner temperature to 56°C. After passage of 2.5 hours, a solution of a modifier prepared in advance in a 0.5-liter dissolving tank was rushed into the polymerization vessel by using 1.5 kg of vinyl chloride (addition of the modifier at this stage will be referred to as "post addition" hereinafter). The mixture was stirred for 5 minutes and recovery of the unreacted monomer was initiated. The recovery was carried out at an inner temperature of 50°C under a constant inner pressure of 7.2 kg/cm²G. When the inner temperature was elevated, the recovery was conducted under spontaneous pressure, and, then, the reduced pressure recovery was conducted.

Then, 3.8 kg of the polymer taken out from the product of the above-mentioned bulk polymerization was charged as the seed polymer into a 100-liter polymerization vessel equipped with a turning type spray nozzle having an inlet inner diameter of 1.0 mm and an outlet inner diameter of 1.5 mm and an anchor type stirring vane having a strip type vane arranged in the middle stage. Oxygen was removed by the evacuation-nitrogen substitution-evacuation treatments in the same manner as described above. Stirring was carried out at 80 rpm, and the temperature was elevated by circulating warm water in a jacket. Vinyl chloride was gradually added, and the pressure was elevated. When the inner temperature was elevated to 60.5°C and the inner pressure was elevated to 7.0 kg/cm²G (Pr = 0.75), 2.7 ml of a 50% by weight solution of MC in toluene was charged in a charger. After air bubbles had been removed, the solution was sprayed into the polymerization vessel from the spray nozzle by a pressure pump for feeding vinyl chloride, and polymerization was initiated. The jacket was maintained at 62°C and the flow rate of vinyl chloride fed by the pressure pump was servo-controlled so that the inner temperature was maintained at 60.5°C. The gas of the evaporated excessive vinyl chloride was withdrawn from the polymerization vessel by maintaining the inner pressure at 7.0 kg/cm²G. This gas was liquefied by a cooler and used again. The reaction speed was estimated from the amount decreased of vinyl chloride determined at predetermined intervals in a metering tank. When this reaction speed was reduced, MC was additionally supplied. After passage of 8.5 hours from the point of initiation of the reaction, 3 g of hydroxy-di-t-butyltoluene dissolved in vinyl chloride in advance in a dissolving tank was added to the reaction mixture to stop the polymerization. The unreacted monomer was recovered, the pressure was reduced to remove the residual monomer, and a product was taken out.

In Comparative Examples 1 and 5, the modifier was not added at the initial addition. In Example 2, 3.0 g of stearic acid was added together with the modifier. In Examples 3 through 5, 7 through 9, 11, and 13 and Comparative Example 5, 3.0 g of stearic acid, 3.0 g of dioctyl tin dilaurate, and 1.0 g of a $C_{16-18}$ higher alcohol (Kalcol 68 supplied by Kao Soap) were added together with the modifier.

In Comparative Examples 1 through 7, the post addition was not carried out.

Conditions not described above and obtained results are shown in Table 1.

Table 1

| | Run No. | Co 1 | Co 2 | Co 3 | Ex 1 | Ex 2 | Ex 3 | Ex 4 | Ex 5 |
|---|---|---|---|---|---|---|---|---|---|
| Bulk polymerization | Modifier | – | T-50 | T-50 | T-50 | T-50 | T-50 | T-50 | T-50 |
| | Amount at initial addition, g | – | 3.0 | 8.0 | 3.0 | 3.0 | 3.0 | 3.0 | 6.0 |
| | Amount at post addition, g | – | – | – | 5.0 | 5.0 | 5.0 | 10.0 | 5.0 |
| | Conversion, % | 15.5 | 16.5 | 17.1 | 16.7 | 16.6 | 17.1 | 17.2 | 17.7 |
| | Fraction below 48-mesh, % | 85 | 94 | 95 | 97 | 98.5 | 98.5 | 99.5 | 99 |
| | Bulk density | 0.355 | 0.340 | 0.335 | 0.342 | 0.345 | 0.353 | 0.335 | 0.345 |
| | Average polymerization degree | 1030 | 1020 | 1020 | 1020 | 1022 | 1020 | 1024 | 1015 |
| Gas phase polymerization | Gas phase polymerization amount, kg | 20.9 | 21.0 | 21.0 | 21.5 | 21.0 | 21.3 | 20.5 | 21.0 |
| | Amount of MC, g | 3.66 | 3.89 | 3.97 | 4.08 | 3.85 | 3.88 | 3.78 | 3.82 |
| | Breeding ratio | 5.50 | 5.53 | 5.53 | 5.66 | 5.53 | 5.60 | 5.40 | 5.53 |
| | Reactivity | 550 | 520 | 510 | 510 | 525 | 530 | 520 | 530 |
| | 48-Mesh passing fraction, % | 85 | 95 | 95 | 96 | 97 | 98 | 98 | 98 |
| | Average degree of polymerization | 1030 | 1018 | 1020 | 1023 | 1015 | 1025 | 1020 | 1017 |
| | Bulk density | 0.485 | 0.480 | 0.475 | 0.485 | 0.488 | 0.491 | 0.476 | 0.480 |
| Fish eye value, number/50 cm$^2$ | 5-minute value | 2000 | 100 | 90 | 21 | 13 | 7 | 6 | 20 |
| | 7-minute value | 250 | 22 | 20 | 6 | 3 | 2 | 3 | 4 |
| | 9-minute value | 75 | 5 | 3 | 1 | 0 | 0 | 1 | 2 |
| 100-Mesh passing fraction, % | | 37.2 | 49.8 | 55.3 | 53.4 | 57.3 | 62.7 | 65.3 | 59.3 |
| Amount of absorbed plasticizer, % | | 24.0 | 26.0 | 26.3 | 26.3 | 26.2 | 26.5 | 25.8 | 25.4 |
| Rigid composition | Hue | 4 | 4 | 4 | 4 | 4 | 5 | 5 | 5 |
| | Blackening time, minutes | 180 | 180 | 180 | 180 | 180 | 190 | 190 | 190 |

Table 1 (Continued)

| Run No. | | Co 4 | Ex 6 | Ex 7 | Ex 8 | Ex 9 | Co 5 |
|---|---|---|---|---|---|---|---|
| Bulk polymerization | Modifier | EVA | EVA | EVA | EVA | EVA | EVA |
| | Amount at initial addition, g | 3.0 | 3.0 | 3.0 | 3.0 | 3.0 | 3.0 |
| | Amount at post addition, g | - | 5.0 | 5.0 | 10.0 | 5.0 | - |
| | Conversion, % | 14.8 | 14.9 | 15.3 | 15.2 | 14.3 | 15.0 |
| | 48-Mesh passing fraction, % | 93 | 97 | 97 | 98 | 98 | 90 |
| | Bulk density | 0.360 | 0.345 | 0.350 | 0.340 | 0.360 | 0.358 |
| | Average degree of polymerization | 998 | 996 | 1008 | 1010 | 990 | 1020 |
| Gas phase polymerization | Gas phase polymerization amount, kg | 20.5 | 20.3 | 20.7 | 20.4 | 20.0 | 21.0 |
| | Amount of MC, g | 4.37 | 4.51 | 4.32 | 4.65 | 4.48 | 3.66 |
| | Breeding ratio | 5.40 | 5.34 | 5.45 | 5.37 | 5.26 | 5.53 |
| | Reactivity | 450 | 430 | 460 | 420 | 425 | 460 |
| | 48-Mesh passing fraction, % | 95 | 96 | 98 | 98 | 96 | 92 |
| | Bulk density | 0.490 | 0.475 | 0.480 | 0.470 | 0.490 | 0.488 |
| | Fish eye value, number/50 cm$^2$ — 5-minute value | 230 | 60 | 25 | 13 | 15 | 700 |
| | 7-minute value | 25 | 13 | 7 | 5 | 6 | 70 |
| | 9-minute value | 8 | 3 | 1 | 1 | 2 | 30 |
| | Amount of absorbed plasticizer, % | 25.2 | 25.8 | 26.1 | 25.3 | 25.7 | 23.8 |

EP 0 191 875 B1

Table 1 (Continued)

|  | Run No. | | Co 6 | Ex 10 | Ex 11 | Co 7 | Ex 12 | Ex 13 |
|---|---|---|---|---|---|---|---|---|
| Bulk polym-erization | Modifier | | Cl-PE | Cl-PE | Cl-PE | 11) | 11) | 11) |
| | Amount at initial addition, g | | 3.0 | 3.0 | 3.0 | 3.0 | 3.0 | 3.0 |
| | Amount at post addition, g | | - | 5.0 | 5.0 | - | 5.0 | 5.0 |
| | Conversion, % | | 15.0 | 15.3 | 15.8 | 16.3 | 16.4 | 16.1 |
| | 48-Mesh passing fraction, % | | 89 | 92 | 97 | 90 | 95 | 97 |
| | Bulk density | | 0.350 | 0.345 | 0.350 | 0.360 | 0.358 | 0.355 |
| | Average degree of polymerization | | 1020 | 1025 | 1020 | 1050 | 1050 | 1045 |
| Gas phase polymeri-zation | Breeding ratio | | 5.60 | 5.45 | 5.55 | 5.70 | 5.60 | 5.55 |
| | Reactivity | | 530 | 510 | 520 | 540 | 530 | 540 |
| | 48-Mesh passing fraction, % | | 87 | 92 | 95 | 88 | 94 | 97 |
| | Bulk density | | 0.475 | 0.470 | 0.480 | 0.490 | 0.480 | 0.475 |
| | Average degree of polymerization | | 1025 | 1020 | 1025 | 1040 | 1040 | 1035 |
| | Fish eye value, number/50 $cm^2$ | 5-minute value | 300 | 70 | 20 | 150 | 30 | 13 |
| | | 7-minute value | 35 | 15 | 8 | 10 | 7 | 4 |
| | | 9-minute value | 15 | 3 | 1 | 4 | 2 | 1 |

Note

1) In column "Run No.", "Co" is an abbreviation for "Comparative Example", and "Ex" is an abbreviation for "Example".

2) In column "Modifier", "T—50" represents Ethyl Cellulose T—50 supplied by Hercules Co.

3) The "Breeding ratio" indicates the ratio of the gas phase polymerization amount to the amount of the seed polymer.

4) The "Reactivity" indicates a value calculated according to the following equation:

$$\frac{[\text{gas phase polymerization amount (g)} - \text{seed polymer amount (g)}]}{[\text{initiator amount (g)} \times \text{time (hours)}]}$$

5) The bulk density and the average degree of polymeriation were determined according to the method of Japan Industrial Standard (JIS) K—6721.

6) The amount of the absorbed plasticizer was determined under the following conditions according to the International Standards organization (ISO) test method.

PVC: 2 g

DOP: 2 ml

Centrifugal rotation time: 30 minutes

Speed: 3000 rpm

Standing time: 10 minutes

7) The fish eye test was carried out under the following conditions.

Composition: 100 parts by weight of PVC (polyvinyl chloride type polymer), 50 parts by weight of DOP (Kao Co.), 1.5 parts by weight of TMF—125 (Tokyo Fine Chem. Co.), 0.5 part by weight of TC—106 (Tokyo Fine Chem. Co.), and 3 parts by weight of ultramarine

Roll temperature: 150°C

Thickness of taken-out sheet: 0.35 mm

Observing tool: Manifying lens of 10

8) The rigid composition was tested under the following conditions.

Composition: 10 parts by weight of PVC, 2.0 parts by weight of dibutyl tin maleate (TVS 2000E, supplied by Nitto Kasei Co.), and 2.0 parts by weight of dibutyl tin laurate (E101, supplied by Tokyo Fine Chem. Co.)

Rolling: Temperature of 150°C, time of 10 minutes, take-out thickness of 1 mm

Pressing: Preheating temperature of 175°C, preheating time of 15 minutes, pressure of 50 kg/cm$^2$, pressing time of 15 minutes, 5-scale hue evaluation

Thermal stability: Time required for blackening by heating in gear oven maintained at 180 ± 1°C

9) "EVA" represents an ethylene-vinyl acetate copolymer having a vinyl acetate content of 40% and a melt index of 75 (supplied under the tradename of "Ultrathene 760" by Toyo Soda Kogyo K.K.).

10) "Cl—PE" represents chlorinated polyethylene (supplied under the tradename of "Erathrene 406AE" by Showa Denko K.K.).

11) In Comparative Example 7 and Examples 12 and 13, as the modifier at the initial addition, an ethylene-acrylic acid ester copolymer having an acrylic acid ester content of 18% and a melt index of 20 (EEADPDJ 9169 supplied by Nippon Unicar) was heated and melted at 70°C for 1 hour, cooled to 56°C, and used for the polymerization. In Examples 12 and 13, "T—50" described in 2) above was used as the modifier at the post addition.

## Example 14

The inner surface of a 100-liter stainless steel polymerization vessel equipped with an anchor type stirring vane was coated with a scale-deposition preventing agent composed of Evans Blue and polyvinyl alcohol. After drying, the polymerization vessel was charged with 3.0 g of ethyl cellulose (T—50 supplied by Hercules Co.), 3.0 g of stearic acid, 1.0 g of a higher alcohol having 16 to 18 carbon atoms (Kalcol supplied by Kao Soap K.K.), ad 3.0 g of dioctyl tin dilaurate (TVS #8105 supplied by Nitto Kasei K.K.). Air in the reaction vessel was removed by evacuation, nitrogen substitution, and evacuation (lower than 5 Torr). A total of 56 kg of vinyl chloride was charged, and the mixture was stirred at 180 rpm. Warm water was circulated in a jacket to elevate the temperature. At an inner temperature of 56°C, 25.0 ml of a 25% solution of isobutyl peroxide (IB) in isoparaffin and 10.0 ml of a 30% solution of 2,4,4-trimethylpentyl-2-peroxyphenoxy acetate (TMP—PA) in isoparaffin were charged in an initiator charger. After removal of air in the initiator charger, the initiators were rushed into the polymerization vessel by 4 kg of vinyl chloride by using a pressure pump to start polymerization. Cooling water was circulated in the jacket so that the inner temperature was kept constant. Then, 5.0 g of ethyl cellulose N—100 (supplied by Hercules Co.) dissolved in advance for 1.5 hours in a 0.5-liter dissolving tank equipped with a stirrer was charged under pressure with the aid of 2 kg of vinyl chloride. After the charge in the polymerization vessel was mixed for 5 minutes, constant pressure recovery was carried out at an inner temperature of 50°C, an inner pressure of 7.2 kg/cm$^2$G, and a speed of 240 rpm. For the initial 60 minutes, recovery was expedited by circulating warm water maintained at 54°C in the jacket. If the constant pressure recovery was thus carried out, 40% to 30% of unreacted vinyl chloride was recovered for the initial 60 minutes. Then, the temperature of warm water in the jacket was lowered to 52°C to slightly reduce the recovery speed. When the inner temperature was elevated to 52°C, spontaneous pressure recovery and reduced pressure recovery were conducted to remove residual vinyl chloride, and a product was then withdrawn. The conversion was 17.5%, and the fraction above a 48-mesh sieve was 1.5%.

A 100-liter stainless steel polymerization vessel equipped with a stirrer having an anchor type vane and a strip type vane arranged in the middle stage was coated with the above-mentioned scale-deposition preventing agent and was then charged with 3.8 kg of the above-mentioned seed polymer. After removal of air, stirring was carried out at 80 rpm, and the temperature was elevated by circulating warm water in a jacket. Then, vinyl chloride was gradually charged into the polymerization vessel through a turning type spray nozzle having an inlet diameter of 1 mm and an outlet diameter of 1.5 mm to elevate the pressure. When the temperature was elevated at 60.5°C and the pressure was elevated to 7.0 kg/cm²G (Pr = 0.75), 3.0 ml of a 50% solution of di-3-methyl-3-methoxybutylperoxy dicarbonate (MC) in toluene as the initiator was charged in a charger. After removal of air, the initiator solution was sprayed in the polymerization vessel from a spray nozzle by a pressure pump for feeding vinyl chloride. The polymerization was thus initiated.

The jacket was maintained at a constant temperature of 61.0°C. For removing the polymerization heat, the flow rate of the pressure pump for feeding vinyl chloride was servo-controlled so that the inner temperature was maintained at a constant level. Vinyl chloride gas evaporated by removal of the polymerization heat was recovered by adjusting the inner pressure to a predetermined level. The recovered gas was liquefied by a condenser and recycled. The reaction rate could be estimated from the amount decreased of VCM determined at predetermined intervals in a metering tank. When the reaction rate was lowered, the initiator was additionally supplied. Wen the breeding ratio reched 5.5, a solution of 3.5 g of 4,4-butylidene-bis(3-methyl-6-tert-butylphenol) as a polymerization inhibitor in vinyl chloride was added to the reaction mixture. Unreacted vinyl chloride was recovered, residual vinyl chloride was removed under a reduced pressure, and 21.0 kg of a product was withdrawn. The fraction on a 48-mesh sieve was 1.5%. The obtained results are shown in Table 2.

### Example 15

Bulk polymerization was carried out according to the same procedure in the same apparatus as described in Example 14, but the speed at the time of recovery was changed to 180 rpm. Other conditions were the same as described in Example 14. The obtained results are shown in Table 2.

### Example 16

The procedures of Example 14 were repeated in the same manner except that the speed at the bulk polymerization was reduced to 120 rpm. The obtained results are shown in Table 2.

### Example 17

The procedures of Example 14 were repeated in the same manner except that the speed at the time of recovery was changed to 60 rpm. The obtained results are shown in Table 2.

Table 2

|  | Example 14 | Example 15 | Example 16 | Example 17 |
|---|---|---|---|---|
| Amount of initiator |  | IB 25% | 25.0 ml |  |
|  |  | TMP-PA 30% | 10.0 ml |  |
| Speed (rpm) of time of recovery | 240 | 180 | 120 | 60 |
| Conversion (%) | 17.5 | 17.4 | 17.4 | 17.5 |
| Bulk density | 0.39 | 0.36 | 0.34 | 0.30 |
| Breeding ratio[1] | 5.50 | 5.55 | 5.53 | 5.60 |
| Fraction passing 48-mesh (%) | 99 | 98 | 98 | 94 |
| $\bar{p}$ | 1020 | 1020 | 1020 | 1010 |
| Bulk density | 0.54 | 0.52 | 0.48 | 0.43 |
| Amount (%) of absorbed plasticizer | 24.0 | 24.5 | 24.8 | 25.4 |
| Fish eye test 5-minute value | 23 | 13 | 7 | 4 |
| 7-minute value | 5 | 3 | 3 | 2 |
| 9-minute value | 1 | 0 | 1 | 0 |

EP 0 191 875 B1

Note
1) Breeding ratio = (amount of gas phase polymerization product)/(amount of seed polymer)

Examples 18 and 19

In the same polymerization apparatus as used in Example 14, the gas phase polymerization was carried out by using the same seed polymer as described in Example 14 while changing the Pr value as indicated in Table 3. The obtained results are shown in Table 3.

### Table 3

### (rotation number of 120 rpm at time of recovery at bulk polymerization)

| | Amount of initiator | | |
|---|---|---|---|
| | | IB 25% | 25.0 ml |
| | | TMP-PA 30% | 10.0 ml |
| Initially added additives | Etocel N-50 | 3.0 g | |
| | Stearic acid | 3.0 " | |
| | Kalcol 68 | 1.0 " | |
| | TVS8105 | 3.0 " | |
| Post-added modifier | Chlorinated polyethylene | 10.0 " | |
| Conversion (%) | | 17.2 | |
| 48-Mesh passing fraction (%) | | 97 | |
| Bulk density | | 0.345 | |

| | | Example 18 | Example 19 |
|---|---|---|---|
| Polymerization temperature (°C) | | 60.5 | 60.5 |
| Polymerization pressure $(kg/cm^2 G)$ | | 6.5 | 7.0 |
| Pr | | 0.71 | 0.75 |
| Gas phase polymerization amount (kg) | | 19.8 | 21.5 |
| Breeding ratio | | 5.20 | 5.65 |
| Reactivity[1] | | 450 | 520 |
| 48-Mesh passing fraction (%) | | 92 | 96 |
| $\bar{P}$ | | 1004 | 1020 |
| Bulk density | | 0.49 | 0.51 |
| Fish eye test | 5-minute value | 3 | 9 |
| | 7-minute value | 1 | 3 |
| | 9-minute value | 0 | 1 |

# EP 0 191 875 B1

Note

1) $$\text{Reactivity} = \frac{(\text{amount of gas phase polymerization product} - \text{amount of seed polymer})}{(\text{amount of initiator} \times \text{reaction time})},$$

(g-PVC/g-initiator hours)

### Examples 20 through 22

In Examples 20 through 22, the temperature at the time of the constant pressure recovery was changed to 50°C, 45°C, and 35°C, respectively.

In each example, the jacket temperature was adjusted to the inner temperature plus 4°C for the initial 60 minutes and then to the inner temperature plus 2°C. The recovery speed was kept high at the initial stage and was reduced at the later stage. The recovery was effected in the substantially constant state. The polymerization apparatus and operations were the same as described in Example 14. The obtained results are shown in Table 4.

## Table 4

| | Example 20 | Example 21 | Example 22 |
|---|---|---|---|
| Ethyl cellulose T-50 | | 3.0 g | |
| Stearic acid | | 3.0 g | |
| Kalcol 68 | | 1.0 g | |
| TVS8105 | | 3.0 g | |
| Post-added ethyl cellulose T-50 | | 3.0 g | |
| Recovery temperature | 50°C | 45°C | 35°C |
| Recovery pressure | 7.2 kg/cm$^2$G | 6.2 kg/cm$^2$G | 4.5 kg/cm$^2$G |
| Recovery speed | | 180 rpm | |
| Conversion (%) | 17.2 | 17.1 | 17.2 |
| Bulk density | 0.36 | 0.34 | 0.31 |
| Breeding ratio | 5.55 | 5.60 | 5.65 |
| 48-Mesh passing fraction (%) | 98 | 97 | 96 |
| $\bar{P}$ | 1020 | 1020 | 1010 |
| Bulk density | 0.52 | 0.49 | 0.45 |
| Absorbed plasticizer (%) | 24.5 | 25.2 | 25.8 |
| Fish eye test    5-minute value | 10 | 6 | 3 |
| 7-minute value | 3 | 3 | 2 |
| 9-minute value | 0 | 0 | 1 |

## Claims

1. A process for the preparation of a polyvinyl chloride type polymer which comprises firstly carrying out a bulk homopolymerization or bulk copolymerization of vinyl chloride in the presence of a polymeric substance which is soluble or colloidally dispersible in vinyl chloride as modifier to a conversion rate in the range of 10 to 25%, the modifier being selected from the gorup consisting of oil-soluble cellulose derivatives, ethylene-vinyl acetate copolymers, ethylene-acrylic acid ester copolymers, methacrylic acid homopolymers and copolymers, aromatic and aliphatic petroleum resins, modified polyvinyl alcohols having a low saponification degree, polyvinyl acetate, uncured chloroprene rubbers, uncured nitrile rubbers, chlorinated polyethylene and mixtures of two or more of these products, and after completion of the polymerization, adding another sample of the above polymeric substance used as modifier to the slurry so formed by polymerization, thus producing a seed polymer for the gas phase polymerization of vinyl chloride, and thereafter carrying out a gas phase polymerisation of vinyl chloride using the thus-produced seed polymer.

2. A process according to claim 1, wherein the amount of the polymeric substance soluble or colloidally dispersible in vinyl chloride, which is made present in the polymerization system, is at least 10 ppm based on the polymer in the formed slurry, and the amount of the polymeric substance soluble or colloidally dispersible in vinyl chloride, which is added after completion of the polymerization, is at least 30 ppm based on the polymer in the formed slurry.

3. A process according to claim 1, wherein the bulk polymerization is carried out in the presence of 50 to 5000 ppm, based on the polymer in the formed slurry, of a lubricant and 50 to 5000 ppm, based on the polymer in the formed slurry, of a stabilizer.

4. A process according to claim 1, wherein (a) the bulk polymerization is carried out at a conversion of 14% to 25% and (b) recovery of the unreacted monomer is carried out under such conditions that (i) the inner temperature of the rection vessel is maintained at 45°C to 60°C at the contsant pressure recovery and (ii) an anchor type stirring vane having a vane diameter corresponding to 93% to 96% of the inner diameter of the reaction vessel is rotated at a rate of 100 to 300 rpm.

5. A process according to claim 4, wherein at the constant pressure recovery of the unreacted monomer, 40% to 30% of the unreacted monomer is recovered for the initial 30 minutes and 70% to 50% of the unreacted monomer is recovered for the initial 60 minutes, and then, the recovery speed is reduced.

6. A process according to claim 1, wherein the comonomer for the copolymerization with vinyl chloride is selected from vinyl halides such as vinyl fluoride and vinyl bromide, olefins such as ethylene, propylene, and n-butene, vinyl esters such as vinyl acetate, vinyl propionate, vinyl laurate, and vinyl stearate, unsaturated acids such as acrylic acid, methacrylic acid, and itaconic acid, esters thereof, vinyl ethers such as methylvinyl ether and ethylvinyl ether, maleic acid, fumaric acid and maleic anhydride and derivatives thereof, styrene and derivatives thereof, and vinylidene chloride and vinylidene fluoride.

7. A process according to claim 1, wherein the polymerization is initiated with the use of an initiator selected from isobutyl peroxide, acetylcyclohexylsulfonyl peroxide, 2,2,4-trimethylpentyl-2-peroxyphenoxy acetate, cumylperoxyneodecanate, di-3-methoxybutylperoxy dicarbonate, and di-2-ethoxyethylperoxy dicarbonate.

**Patentansprüche**

1. Verfahren zur Herstellung eines Polymerisationsproduktes vom Typ Polyvinylchlorid dadurch, daß zuerst eine Substanzhomopolymerisation oder Substanzcopolymerisation von Vinylchlorid in Anwesenheit eines Polymerproduktes durchgeführt wird, das als Modifikator in Vinylchlorid bis zu einer Umwandlungsrate im Bereich von 10 bis 25% löslich oder kolloidal dispersionsfähig ist, wobei der Modifikator ausgewählt ist aus der Gruppe bestehend aus öllöslichen Cellulosederivaten, Ethylen-Vinylacetat- Copolymerisaten, Ethylen-Acrylosäureester-Copolymerisaten, Methacrylsäure-Homopolymerisaten und Copolymerisaten, aromatischen und aliphatischen Petroleumharzen, modifizierten Polyvinylalkoholen mit einem niedrigen Verseifungsgrad, Polyvinylacetat, ungehärteten Chloropren- Gummiprodukten, ungehärteten Nitril-Gummiprodukten, chloriertem Polyethylen und Mischungen von zwei oder mehreren dieser Produkte, und nach Beendigung der Polymerisation eine weitere Probe des als Modifikator verwendeten Polymerproduktes zu der so durch Polymerisation gebildeten Aufschlämmung zugefügt wird und so ein Impfpolymerisat für die Gasphasenpolymerisation von Vinylchlorid gebildet wird, und dann eine Gasphasenpolymerisation von Vinylchlorid unter Verwendung des so hergestellten Impfpolymerisats durchgeführt wird.

2. Verfahren gemäß Anspruch 1, worin die Menge des in Vinylchlorid löslichen oder kolloidal dispergierbaren Polymerproduktes, das in dem Polymerisationssystem geschaffen wird, mindestens 10 ppm auf der Basis des Polymerisats in der gebildeten Aufschlämmung beträgt und die Menge der in Vinylchlorid löslichen oder kolloidal dispergierbaren Polymerproduktes, das nach Abschluß der Polymerisation zugefügt wird, mindestens 30 ppm auf der Basis des Polymerisats in der gebildeten Aufschlämmung beträgt.

3. Verfahren gemäß Anspruch 1, worin die Substanzpolymerisation in Anweseheit von 50 bis 5000 ppm eines Schmiermittels, auf der Basis des Polymerisats in der gebildeten Aufschlämmung, und 50 bis 5000 ppm eines Stabilisators auf der Basis des in der gebildeten Aufschlämmung anwesenden Polymerisats durchgeführt wird.

4. Verfahren gemäß Anspruch 1, worin a) die Substanzpolymerisation durchgeführt wird mit einer Umwandlung von 14 bis 25% und b) die Rückgewinnung von nicht umgesetztem Monomerprodukt unter solchen Bedingungen durchgeführt wird, daß (i) die Innentemperatur des Reaktionskessels bei 45 bis 60°C bei der Wiedergewinnung unter konstantem Druck gehalten und (ii) ein Rührflügel vom Ankertyp mit einem Rührflügeldurchmesser entsprechend 93 bis 96% des inneren Durchmessers des Reaktionskessels mit einer Umdrehungsgeschwindigkeit von 100 bis 300 U/min rotiert wird.

5. Verfahren gemäß Anspruch 4, worin bei der Wiedergewinnung des nicht umgesetzten Monomerproduktes unter konstantem Druck 40 bis 30% des nicht umgesetzten Monomerproduktes während der anfänglichen 30 Minuten wiedergewonnen wird und 70 bis 50% des nicht umgesetzten Monomerproduktes während der anfänglichen 60 Minuten widergewonnen wird und sodann die Wiedergewinnungsgeschwindigkeit vermindert wird.

6. Verfahren gemäß Anspruch 1, worin das Comonomerprodukt für die Copolymerisation mit Vinylchlorid ausgewählt ist aus den Vinylhalogeniden wie Vinylfluorid und Vinylbromid, den Olefinen wie Ethylen, Propylen und n-Buten, den Vinylestern wie Vinylacetat, Vinylpropionat, Vinyllaurat und Vinylstearat, den ungesättigten Säuren wie Acrylsäure, Methacrylsäure und Itaconsäure, den Estern hiervon, den Vinyläthern wie Methylvinyläther und Ethylvinyläther, Maleinsäure, Fumarsäure und Maleinsäureanhydrid und Derivaten hiervon, Styrol und Derivaten hiervon und Vinylidenchlorid und Vinylidenfluorid.

15

7. Verfahren gemäß Anspruch 1, worin die Polymerisation durch Verwendung eines Auslösers ausgelöst ist, der ausgewählt ist von Isobutylperoxid, Acetylcyclohexylsulfonylperoxid, 2,2,4-Trimethyl-pentyl-2-perodyphenoxyacetat, α-Cumylperoxyneodecanat, Di-3-methoxybutylperoxydicarbonat und Di-2-ethoxyethylperoxydicarbonat.

**Revendications**

1. Procédé pour la préparation d'un polymère de type chlorure de polyvinyle qui comprend d'abord l'éxécution d'une homopolymérisation en masse ou une copolymérisation en masse de chlorure de vinyle en présence d'une substance polymère qui est soluble ou dispersible colloïdalement dans le chlorure de vinyle comme agent modifiant jusqu'à un taux de conversion se situant dans la gamme de 10 à 25%, l'agent modifiant étant choisi dans le groupe composé de: des dérivés de cellulose solubles dans l'eau, des copolymères éthylène-acétate de vinyle, des copolymères éthylène-ester d'acide acrylique, des homopolymères et copolymères d'acide méthacrylique, des résines aromatiques et aliphatiques du pétrole, des alcools polyvinyliques modifies ayant un faible degré de saponification, de l'acétate de polyvinyle des caoutchoucs au chloroprène non vulcanisés, des caoutchoucs au nitrile non vulcanisés, des du polyéthylène chloré, et des mélanges de deux ou plus de ces produits, et après achèvement de la polymérisation, l'addition d'un autre échantillon de la substance polymère ci-dessus utilisée comme agent modifiant à la bouillie ainsi formée par polymérisation, procurant ainsi un polymère d'amorçage pour la polymérisation en phase gazeuse du chlorure de vinyle, et ensuite l'exécution d'une polymérizsation en phase gazeuse du chlorure de vinyle utilisant le polymère d'amorçage ainsi produit.

2. Procédé selon la revendication 1, selon lequel la quantité de la substance polymère soluble ou dispersible colloïdalement dans le chlorure de vinyle, qui est rendue présente dans le système de polymérisation, est au moins de 10 ppm sur la base du polymère contenu dans la bouille formée, et la quantite de substance polymère soluble ou dispersible colloïdalement dans le chlorure de vinyle, qui est ajoutée après achèvement de la polymérisation, est au moins de 30 ppm sur la base du polymère contenu dans la bouillie formée.

3. Procédé selon la revendication 1, selon la polymérisation en masse est exécutée en présence de 50 à 5 000 ppm, sur la base du polymère contenu dans la bouillie formée, d'un lubrifiant et de 50 à 5 000 ppm, sur la base du polymère contenu dans la bouillie formée, d'un stabilisant.

4. Procédé selon la revendication 1, selon lequel (a) la polymérisation en masse est exécutée à un taux de conversion de 14% à 25% et (b) la récupération du monomère qui n'a pas réagi est effectuée dans des conditions telles que (i) la température intérieure du ballon de la réaction est maintenue à une température de 45°C à 60°C à la pression constante de récupération et (ii) une pale d'agitation du type d'une ancre ayant un diamètre de pale correspondant à une valeur de 93% à 96% du diamètre intérieur du ballon de la réaction est entraînée en rotation à une vitesse de 100 à 300 t/mn.

5. Procédé selon la revendication 4, selon lequel à la pression constante de récupération du monomère qui n'a pas réagi, une quantité de 40% à 30% de ce monomère qui n'a pas réagi est récupérée pendant les trente premières minutes et une quantité de 70% à 50% du monomère qui n'a pas réagi est récupérée pendant les soixante premières minutes, et ensuite la vitesse de récupération est réduite.

6. Procédé selon la revendication 1, selon lequel le comonomère pour la copolymérisation avec le chlorure de vinyle est choisi parmi des halogénures de vinyle comme le fluorure de vinyle et le bromure de vinyle, des oléfines comme l'éthylène, le proplène et le n-butène, des esters vinyliques comme l'acétate de vinyle, le propionate de vinyle, le laurate de vinyle et le stéarate de vinyle, des acides insaturés comme l'acide acrylique, l'acide méthacryliqueet l'acide itaconique, des esters de ces derniers, des éthers vinyliques comme l'éther mèthylvinylique et l'éther éthylvinylique, l'acide maléique, l'acide fumarique et l'anhydride maléique et des dérivés de ces derniers, le styrène et ses dérivés, et le chlorure de vinylidène et le fluorure de vinylidène.

7. Procédé selon la revendication 1, selon lequel la polymérisation est provoquée par l'emploi d'un initiateur choisi parmi l'isobutyl-peroxyde, l'acétylcyclohexylsulfonyl-proxyde, l'acétate de 2,2,4-triméthyl-pentyl-2-phénoxyperoxyde, le néodécanate de α-cumylperoxyde, le dicarbonate de di-3-mèthoxybutyl-peroxyde et le dicarbonate de di-2-éthylperoxyde.

Fig. 1

BULK POLYMERIZATION PRODUCT

SUSPENSION POLYMERIZATION PRODUCT

POROSITY mℓ/g

BREEDING RATIO

EP 0 191 875 B1

Fig. 2

Fig. 3